# EUROPEAN PATENT APPLICATION

(11) **EP 4 485 339 A1**
(43) Date of publication of application: **01.01.2025**
(21) Application number: 23759872.7
(22) Date of filing: 17.02.2023
(51) Int. Cl.: G06Q 50/10

(54) **INFORMATION PROCESSING DEVICE, INFORMATION PROCESSING METHOD, AND INFORMATION PROCESSING PROGRAM**

(30) Priority: 24.02.2022 JP 2022026810
(71) Applicant: Pioneer Corporation, Tokyo 113-0021 (JP)
(72) Inventor: FUNAKOSHI, Atsushi, Kawagoe-shi, Saitama 350-8555 (JP); SUGINO, Ryoji, Kawagoe-shi, Saitama 350-8555 (JP); HISHINUMA, Akinori, Kawagoe-shi, Saitama 350-8555 (JP)
(74) Representative: Hoffmann Eitle
(86) International application number: PCT/JP2023/005642
(87) International publication number: WO 2023/162871

(57) **Abstract**

A storage unit 6 stores an elapsed time for each piece of identification information for identifying a communication contract. A communication unit 4 performs communication using the identification information. When a power source of a communication control terminal 1 is turned ON, a measurement unit 15 reads out, from the storage unit 6, the elapsed time corresponding to the identification information used for communication by the communication unit 4, and measures an elapsed time following the read-out elapsed time. A communication control unit 17 permits communication by the communication unit 4 in a case in which the elapsed time measured by the measurement unit 15 falls within a predetermined allowed time, and limits use of communication by the communication unit 4 in a case in which the elapsed time exceeds the allowed time.

## Description

### TECHNICAL FIELD

The present invention relates to an information processing device, an information processing method, and an information processing program.

### BACKGROUND ART

There is known a map display device capable of automatically changing a display mode of a map image to be displayed depending on whether the map display device is in a vehicle-mounted state (for example, refer to Patent Literature 1). For example, the map display device disclosed in Patent Literature 1 displays a map image appropriate for use in a vehicle in a case of being used in the vehicle, and displays a map image appropriate for use in a home in a case of being used in the home.

### CITATION LIST

### PATENT LITERATURE

Patent Literature 1: Japanese Patent No. 4182724

### SUMMARY

### TECHNICAL PROBLEM

There is known an information processing device that provides a mobile communication connection service in a vehicle. Examples of such an information processing device include an on-vehicle mobile router and a car navigation system having a mobile communication function. Some of such information processing devices enable communication in a case of a traveling state, and limit communication in a case of a non-traveling state. To prevent convenience from being impaired, some information processing devices have a function of enabling communication for a certain elapsed time even when the vehicle is in the non-traveling state, and limiting communication after the certain elapsed time.

Information required for mobile communication is set to the information processing device using a Subscriber Identity Module card (SIM card) and the like. Additionally, the SIM card can be replaced. However, in a case in which the information processing device has a function of limiting communication after a certain elapsed time as described above, communication may be limited even when the SIM card is replaced, and convenience may be impaired. For example, there is the problem that if communication is limited after a certain elapsed time when the vehicle is in the non-traveling state, communication is also limited even if the SIM card is replaced with a new SIM card.

The present invention is made in view of such a situation, and aims at providing an information processing device, an information processing method, and an information processing program capable of preventing convenience from being impaired, for example.

### SOLUTION TO PROBLEM

The information processing device according to claim 1 is an information processing device, wherein the information processing device includes: a storage unit configured to store an elapsed time for each piece of identification information for identifying a communication contract; a communication unit configured to perform communication using the identification information; a measurement unit configured to read out, from the storage unit, the elapsed time corresponding to the identification information used for communication by the communication unit when a power source of the information processing device is turned ON, and measure an elapsed time following the read-out elapsed time; and a communication control unit configured to permit communication by the communication unit in a case in which the elapsed time measured by the measurement unit falls within a predetermined allowed time, and limit use of communication by the communication unit in a case in which the elapsed time exceeds the allowed time.

The information processing method according to claim 10 is an information processing method used for an information processing device, wherein the information processing method includes: a step of reading out, when a power source of the information processing device is turned ON, an elapsed time corresponding to identification information used for communication by a communication unit configured to perform communication by using the identification information from a storage unit configured to store an elapsed time for each piece of the identification information for identifying a communication contract, and measuring an elapsed time following the read-out elapsed time; and a step of permitting communication by the communication unit in a case in which the measured elapsed time falls within a predetermined allowed time, and limiting use of communication by the communication unit in a case in which the measured elapsed time exceeds the allowed time.

The information processing program according to claim 11 is an information processing program used for an information processing device to cause the information processing device to perform, wherein the information processing program includes: a procedure of reading out, when a power source of the information processing device is turned ON, an elapsed time corresponding to identification information used for communication by a communication unit configured to perform communication by using the identification information from a storage unit configured to store an elapsed time for each piece of the identification information for identifying a communication contract, and measuring an elapsed time following the read-out elapsed time; and a procedure of permitting communication by the communication unit in a case in which the measured elapsed time falls within a predetermined allowed time, and limiting use of communication by the communication unit in a case in which the measured elapsed time exceeds the allowed time.

### BRIEF DESCRIPTION OF DRAWINGS

FIG. 1 is a block diagram illustrating a functional configuration example of a communication control terminal according to an embodiment.
FIG. 2 is a diagram illustrating an example of a utilization scene of the communication control terminal.
FIG. 3 is a diagram illustrating an example of a vehicle coordinate system.
FIG. 4 is a diagram illustrating an example of a method for determining an abnormal rotation state.
FIG. 5 is a diagram illustrating an example of a method for determining an abnormal vibration state.
FIG. 6 is a diagram illustrating an example of a method for determining a traveling state.
FIG. 7 is a diagram illustrating an example of a method for determining a congestion state.
FIG. 8 is a diagram illustrating an example of a start-up condition for a timer.
FIG. 9 is a diagram illustrating an example of a reset condition for the timer.
FIG. 10 is a flowchart illustrating a procedure of communication control processing according to the embodiment.
FIG. 11 is a diagram for explaining a hardware configuration example.

### DESCRIPTION OF EMBODIMENTS

The following describes a mode for carrying out the present invention (hereinafter, referred to as an embodiment) with reference to the drawings. The present invention is not limited to the embodiment described below. Furthermore, in description of the drawings, the same portions are denoted by the same reference numeral.

### <Example of information processing device>

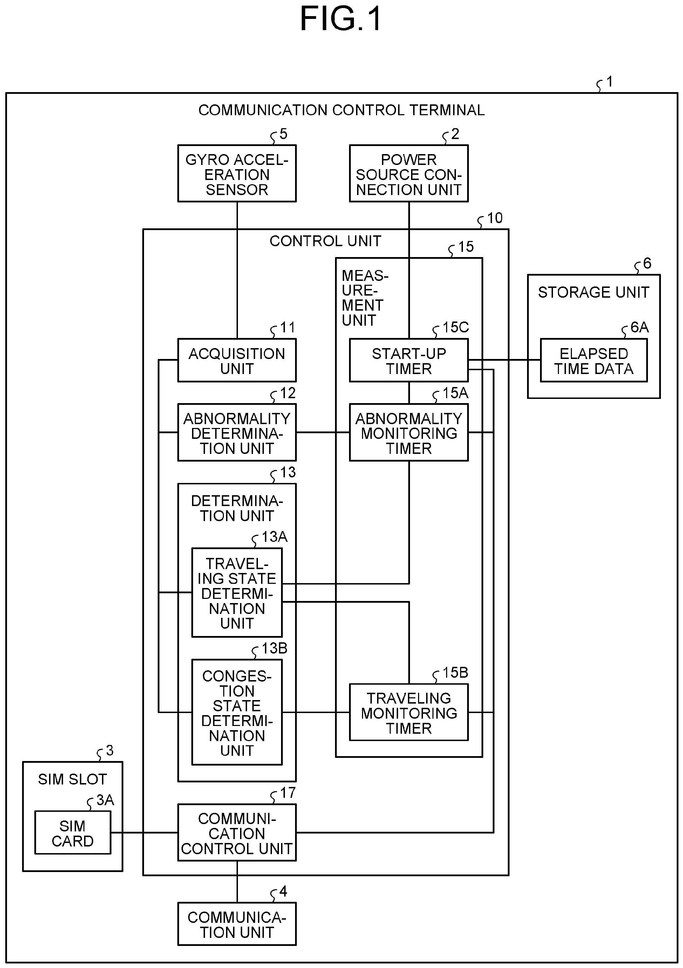

In the embodiment, exemplified is a case in which a substrate processing device is assumed to be a communication control terminal 1 capable of performing mobile communication. FIG. 1 is a block diagram illustrating a functional configuration example of the communication control terminal according to the embodiment. The communication control terminal 1 illustrated in FIG. 1 is an example of an information processing device that controls various functions, services, and the like depending on whether the communication control terminal 1 is in a state of being carried in a vehicle. Hereinafter, the state in which the communication control terminal 1 is carried in the vehicle may be referred to as a "state of being carried in the vehicle" in some cases.

Examples of the communication control terminal 1 as described above include a mobile router configured to connect a wireless communication device compatible with a wireless Local Area Network (LAN) and the like to a mobile network compatible with Long Term Evolution (LTE), 5 Generation (G), and the like.

### <Example of application to services>

For example, the communication control terminal 1 provides a network connection service for causing an appliance compatible with wireless LAN to use data communication using a mobile network in the state of being carried in the vehicle.

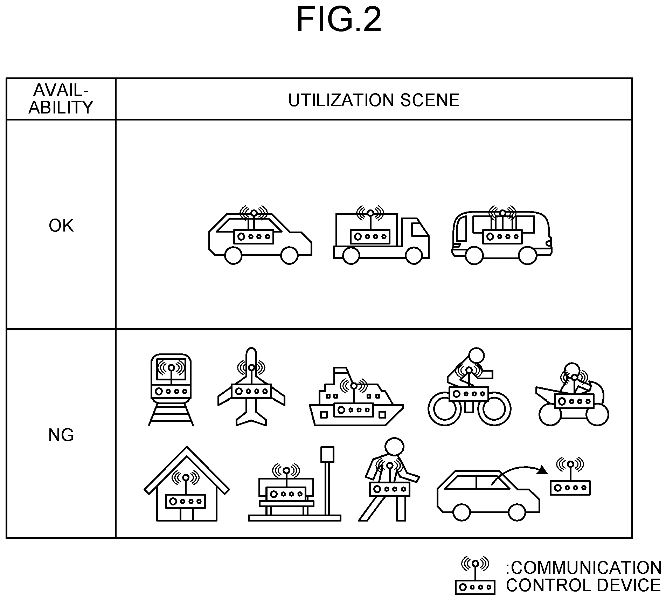

FIG. 2 is a diagram illustrating an example of a utilization scene of the communication control terminal 1. FIG. 2 illustrates availability of data communication and a utilization scene of the communication control terminal 1 in association with each other. As illustrated in FIG. 2, in a case in which the communication control terminal 1 is in a state of being carried in a vehicle such as an automobile, a truck, or a bus, use of data communication is permitted. On the other hand, in a scene in which the communication control terminal 1 is used outside the vehicle such as being used in an electric train, an aircraft, a ship, a bicycle, a motorcycle, a house, a public facility such as a park, or during movement by walking and the like, use of data communication is limited.

In this way, the communication control terminal 1 according to the present embodiment may be applied to a novel network connection service that permits data communication in the state of being carried in the vehicle while limiting use of data communication in a state of not being carried in the vehicle.

As merely an example, FIG. 2 illustrates an example in which an appliance compatible with wireless LAN is connected to the communication control terminal 1 via wireless communication. However, a target of the network connection service is not necessarily limited to the appliance compatible with wireless LAN. For example, an appliance receiving the network connection service may be connected to the communication control terminal 1 by wire. Limitation on the use of data communication performed by the communication control terminal 1 includes a case of limiting data communication between the communication control terminal 1 and an appliance compatible with wireless LAN inside the vehicle, and a case of limiting data communication between the communication control terminal 1 and a communication device on a carrier side providing a mobile network.

### <Configuration of communication control terminal 1>

Next, the following describes a functional configuration of the communication control terminal 1 according to the present embodiment. FIG. 1 schematically illustrates blocks corresponding to respective functions of the communication control terminal 1. As illustrated in FIG. 1, the communication control terminal 1 includes a power source connection unit 2, a SIM slot 3, a communication unit 4, a gyro acceleration sensor 5, a storage unit 6, and a control unit 10.

The power source connection unit 2 may be connected to a power source mounted on a vehicle and the like. As merely an example, the power source connection unit 2 is implemented as a cable with a connector connected to a housing of the communication control terminal 1. For example, the connector is formed to be detachable from an accessory socket or a cigar socket of the vehicle. When the connector is mounted on the accessory socket or the cigar socket, electricity starts to be supplied from the accessory socket or the cigar socket to a main body of the communication control terminal 1 via the cable with the connector.

A SIM card 3A can be set to the SIM slot 3. The SIM card 3A stores various pieces of information about mobile communication. For example, the SIM card 3A stores an identification number such as International Mobile Subscriber Identity (IMSI), and identification information for identifying a communication contract such as a phone number. The SIM slot 3 reads the various pieces of information stored in the set SIM card 3A.

The communication unit 4 communicates with other devices. As one aspect, the communication unit 4 has a function of a wireless LAN access point as an interface on the LAN side. As another aspect, the communication unit 4 has a function of network connection and the like such as a mobile network as an interface on a Wide Area Network (WAN) side. For example, when the communication unit 4 performs communication, the identification information of the SIM card 3A is notified thereto. The communication unit 4 performs mobile communication by using the identification information.

The gyro acceleration sensor 5 can detect acceleration of three axes, for example, the X-axis, the Y-axis, and the Z-axis, and an angular speed around the three axes, for example, roll, pitch, and yaw. Herein, exemplified is a case in which the acceleration of the three axes and the angular speed of the three axes are detected, but the number of axes as a detection target of the acceleration and the angular speed is not limited to three. Herein, exemplified is a case in which both of the acceleration and the angular speed are detected, but any one of them may be detected.

The storage unit 6 is a nonvolatile storage unit that stores various pieces of information used by the control unit 10. The storage unit 6 is, for example, implemented by a semiconductor memory element such as a flash memory and an EEPROM. For example, the storage unit 6 stores elapsed time data 6A.

Herein, to prevent convenience of the network connection service and the like from being impaired, the communication control terminal 1 according to the present embodiment has a function of enabling communication for a certain elapsed time even when the vehicle is in the non-traveling state, and limiting communication after the certain elapsed time.

The elapsed time data 6A is data storing an elapsed time that has elapsed. The elapsed time data 6A stores the elapsed time for each piece of the identification information for identifying the communication contract. For example, the elapsed time data 6A stores the elapsed time for each phone number.

The control unit 10 is a processing unit that performs overall control of the communication control terminal 1. As illustrated in FIG. 1, the control unit 10 includes an acquisition unit 11, an abnormality determination unit 12, a determination unit 13, a measurement unit 15, and a communication control unit 17.

The acquisition unit 11 is a processing unit that acquires acceleration, an angular speed, and a combination thereof. As merely an example, the acquisition unit 11 can acquire time series data of the acceleration of the three axes and the angular speed of the three axes from the gyro acceleration sensor 5. For example, assuming that the gyro acceleration sensor 5 is incorporated and installed in the housing of the communication control terminal 1, the three-axis acceleration and the three-axis angular speed detected by the gyro acceleration sensor 5 can be acquired as values of a sensor coordinate system based on the communication control terminal 1.

The measurement unit 15 measures various kinds of elapsed time to limit communication. For example, the measurement unit 15 includes an abnormality monitoring timer 15A, a traveling monitoring timer 15B, and a start-up timer 15C. The measurement unit 15 measures the elapsed time by counting timer values by the abnormality monitoring timer 15A, the traveling monitoring timer 15B, and the start-up timer 15C, respectively.

As merely an example, the following exemplifies a case in which the abnormality determination unit 12, the determination unit 13, and the communication control unit 17 repeats processing at predetermined cycles shorter than any of the timer values of the abnormality monitoring timer 15A, the traveling monitoring timer 15B, and the start-up timer 15C, for example, every one minute.

The abnormality determination unit 12 is a processing unit that determines any of abnormal states including an abnormal rotation state and an abnormal vibration state. Herein, the "abnormal rotation state" indicates a state in which rotation that cannot be caused in the state of being carried in the vehicle is detected as abnormality. Additionally, the "abnormal vibration state" indicates a state in which vibration that cannot be caused in the state of being carried in the vehicle is detected as abnormality. Any of the "abnormal rotation state" and the "abnormal vibration state" may be referred to as an "abnormal state" in some cases. That is, by detecting the abnormal state, the abnormality determination unit 12 identifies the state of being carried in the vehicle, the state of not being carried in the vehicle, or a state of invalid operation imitating vibration at the time of being mounted on the vehicle.

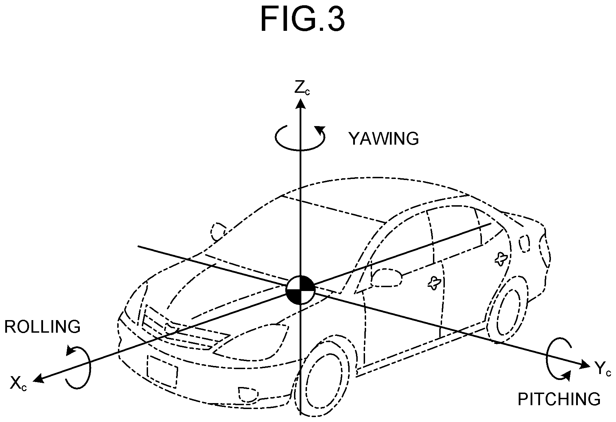

As one aspect, the abnormality determination unit 12 determines abnormality of rolling that cannot be caused in the state of being carried in the vehicle as an example of the abnormal rotation state described above. FIG. 3 is a diagram illustrating an example of a vehicle coordinate system. FIG. 3 exemplifies the vehicle coordinate system defined by the X_{c} axis corresponding to a front and rear direction of the vehicle, the Y_{c} axis corresponding to a right and left direction of the vehicle, and the Z_{c} axis corresponding to an upper and lower direction of the vehicle. Regarding the vehicle coordinate system illustrated in FIG. 3, abnormality is determined for the angular speed around the X_{c} axis corresponding to the front and rear direction of the vehicle, that is, a roll rotational speed.

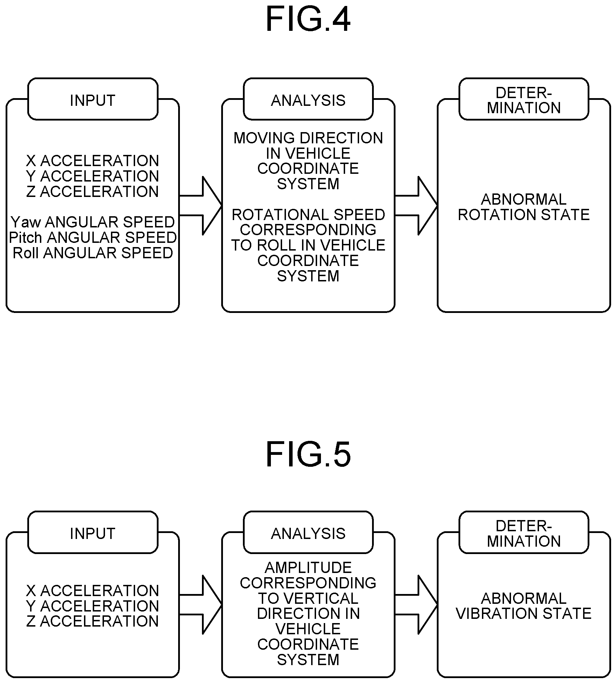

As merely an example, the abnormality determination unit 12 determines a traveling direction from the acceleration, and determines the abnormal rotation state based on the traveling direction and a value of the rotational speed. FIG. 4 is a diagram illustrating an example of a method for determining the abnormal rotation state. In a case of determining the abnormal rotation state, as illustrated in FIG. 4, acceleration of the X-axis, acceleration of the Y-axis, acceleration of the Z-axis, a roll angular speed, a pitch angular speed, and a yaw angular speed may be used as inputs. For example, as in the example described above, in a case in which the abnormal rotation state is determined at one-minute cycles, sensor values corresponding to one minute, for example, pieces of time series data of the three-axis acceleration and the three-axis angular speed are input.

With such inputs, the abnormality determination unit 12 performs the following processing for all sensor values corresponding to a sampling frequency of the gyro acceleration sensor 5 of the time series data of the sensor value, or for each sensor value resampled at predetermined intervals, for example, every one second.

That is, the abnormality determination unit 12 analyzes the traveling direction based on the three-axis acceleration including the acceleration of the X-axis, the acceleration of the Y-axis, and the acceleration of the Z-axis. Specifically, the abnormality determination unit 12 removes gravity acceleration from composite acceleration obtained by compositing the three-axis acceleration. Thereafter, the abnormality determination unit 12 projects, onto a horizontal plane, a vector of the composite acceleration from which the gravity acceleration is removed. For example, the horizontal plane can be calculated in advance by performing calibration using acceleration and the like of the X-axis, the Y-axis, and the Z-axis at the time when the communication control terminal 1 stands still, for example, immediately after the communication control terminal 1 is started up. The abnormality determination unit 12 then can analyze the traveling direction based on the vector of the composite acceleration projected onto the horizontal plane. It can be estimated that the traveling direction obtained as described above corresponds to a direction of the rotation axis X_{c} of roll motion in the vehicle coordinate system illustrated in FIG. 3. In a case in which a relative relation among orientations of the respective axes is fixed between the sensor coordinate system and the vehicle coordinate system, the traveling direction is not changed, so that an analysis result obtained by the first analysis can be continuously reused.

Due to this, the abnormality determination unit 12 converts, into a rotational speed, an angular speed corresponding to the roll motion in the vehicle coordinate system among the roll angular speed, the pitch angular speed, and the yaw angular speed. For example, in a case in which an angular speed (rad/sec) such as the roll angular speed, the pitch angular speed, or the yaw angular speed is output from the gyro acceleration sensor 5, the angular speed is converted into a rotational speed (rpm). Thereafter, the abnormality determination unit 12 determines whether the rotational speed corresponding to the roll motion in the vehicle coordinate system is equal to or larger than a threshold Th1. For example, as the threshold Th1, a value larger than an upper limit value of a roll rotational speed that can be caused at the time when the vehicle turns, for example, "upper limit value + margin α" can be set. At this point, in a case in which the rotational speed corresponding to the roll motion in the vehicle coordinate system is equal to or larger than the threshold Th1 at any one time point in the time series data of the sensor value, the abnormal rotation state is determined.

In this way, the abnormality determination unit 12 detects the abnormal rotation state that cannot be caused by roll motion at the time when the vehicle turns, so that the abnormality determination unit 12 can identify the state of being carried in the vehicle, and the state of not being carried in the vehicle, for example, a state of performing an invalid operation of holding and shaking the housing of the communication control terminal 1 to imitate vibration at the time of being mounted on the vehicle.

The analysis of the traveling direction described above and the determination of the abnormal rotation state described above can be implemented even if the communication control terminal 1 is placed on the vehicle in an optional orientation. For example, the following exemplifies a case in which the housing of the communication control terminal 1 has a box shape. In this case, even if any surface of the housing of the communication control terminal 1 is placed on the vehicle, the analysis of the traveling direction described above and the determination of the abnormal rotation state described above can be implemented. Even if the surface of the vehicle on which the housing of the communication control terminal 1 is placed is tilted to the front, the rear, the left, or the right, the analysis of the traveling direction described above and the determination of the abnormal rotation state described above can be implemented.

Herein, as merely an example, exemplified is a case in which the abnormality of rolling is determined. However, an abnormality of yawing or an abnormality of pitching may be determined, or two or more of the three abnormalities may be determined in combination. In the above example, the analysis of the traveling direction described above is performed by using the acceleration, but the analysis may be performed by using the angular speed.

As another aspect, the abnormality determination unit 12 determines an abnormality of vibration in a vertical direction that cannot be caused in the state of being carried in the vehicle as an example of the abnormal vibration state described above. For example, regarding the vehicle coordinate system illustrated in FIG. 3, an abnormality is determined for an amplitude of the Z_{c} axis corresponding to the upper and lower direction (vertical direction) of the vehicle.

As merely an example, the abnormality determination unit 12 determines the abnormal vibration state based on a value of acceleration. FIG. 5 is a diagram illustrating an example of a method for determining the abnormal vibration state. As illustrated in FIG. 5, in a case of determining the abnormal vibration state, as merely an example, the acceleration of the X-axis, the acceleration of the Y-axis, and the acceleration of the Z-axis may be used as inputs. For example, as in the example described above, in a case in which the abnormal vibration state is determined at one-minute cycles, time series data of three-axis acceleration corresponding to one minute is input.

With such inputs, the abnormality determination unit 12 analyzes the time series data of amplitude in the vertical direction of the vehicle coordinate system, that is, in the Z_{c} axis direction of the vehicle coordinate system based on the time series data of the three-axis acceleration. Specifically, the abnormality determination unit 12 removes gravity acceleration from composite acceleration obtained by compositing the three-axis acceleration. Subsequently, the abnormality determination unit 12 extracts an acceleration component corresponding to a normal direction of a horizontal plane, that is, the vertical direction (upper and lower direction) of the vehicle coordinate system illustrated in FIG. 3 from the composite acceleration from which the gravity acceleration is removed. The abnormality determination unit 12 then performs second-order integration on the time series data of the acceleration component corresponding to the vertical direction of the vehicle coordinate system. Due to this, the time series data of displacement corresponding to the vertical direction of the vehicle coordinate system can be obtained. Furthermore, the abnormality determination unit 12 extracts an extreme value, for example, a local maximum value or a local minimum value from the time series data of displacement corresponding to the vertical direction of the vehicle coordinate system. Due to this, time series data of the amplitude corresponding to the vertical direction of the vehicle coordinate system can be obtained. Thereafter, the abnormality determination unit 12 determines whether the amplitude corresponding to the vertical direction of the vehicle coordinate system is equal to or larger than a threshold Th2. For example, as the threshold Th2, a value larger than an upper limit value of an amplitude that can be caused as road noise at the time when the vehicle is traveling, for example, "upper limit value + margin β" can be set. At this point, in a case in which the amplitude corresponding to the vertical direction of the vehicle coordinate system is equal to or larger than the threshold Th2 at any one time point in the time series data of the three-axis acceleration, the abnormal vibration state is determined. The analysis of the amplitude described above and the determination of the abnormal vibration state described above can also be implemented even if the communication control terminal 1 is placed on the vehicle in an optional orientation.

In this way, the abnormality determination unit 12 detects the abnormal vibration state that cannot be caused by road noise at the time when the vehicle is traveling, so that the abnormality determination unit 12 can identify the state of being carried in the vehicle, and the state of not being carried in the vehicle, for example, the state of performing an invalid operation of holding and shaking the housing of the communication control terminal 1 to imitate vibration at the time of being mounted on the vehicle.

The determination unit 13 is a processing unit that determines whether the communication control terminal 1 is in the state of being carried in the vehicle. As merely an example, in a case in which the abnormality determination unit 12 determines any of the abnormal states including the abnormal rotation state and the vibration movement state, the determination unit 13 determines the state of not being carried in the vehicle. On the other hand, in a case in which the abnormality determination unit 12 determines that the state is not any of the abnormal states including the abnormal rotation state and the vibration movement state, the determination unit 13 determines the state of being carried in the vehicle. A reason for determining the state of being carried in the vehicle in a case in which the state is not the abnormal state is that the communication control terminal 1 is mounted on the accessory socket or the cigar socket of the vehicle at a stage where power is supplied to the communication control terminal 1, and the possibility of the state of being carried in the vehicle is increased.

As illustrated in FIG. 1, the determination unit 13 includes a traveling state determination unit 13A and a congestion state determination unit 13B.

The traveling state determination unit 13A is a processing unit that determines that the vehicle is in a traveling state. As merely an example, in a case in which the determination unit 13 determines the state of being carried in the vehicle, the traveling state determination unit 13A performs determination of the traveling state.

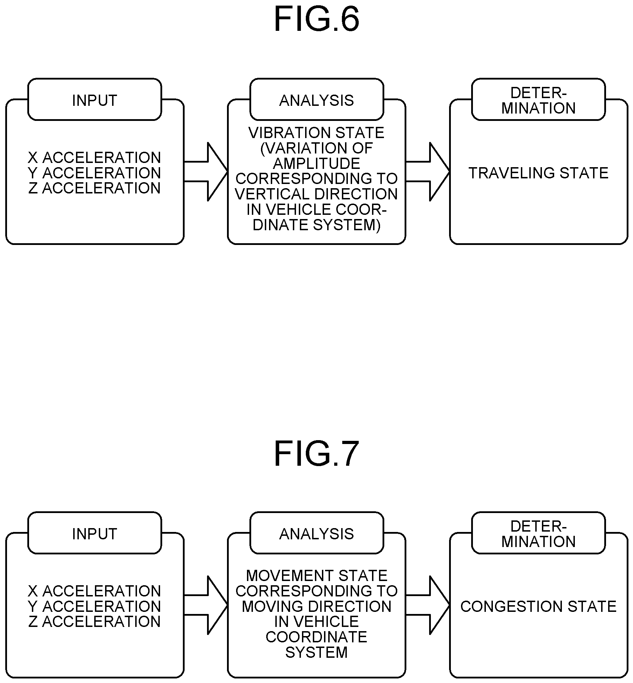

FIG. 6 is a diagram illustrating an example of a method for determining the traveling state. As illustrated in FIG. 6, in a case of determining the traveling state, as merely an example, the acceleration of the X-axis, the acceleration of the Y-axis, and the acceleration of the Z-axis may be used as inputs. For example, as in the example described above, in a case in which the traveling state is determined at one-minute cycles, time series data of three-axis acceleration corresponding to one minute is input.

With such inputs, the traveling state determination unit 13A analyzes a vibration state, for example, variation of amplitude corresponding to the vertical direction of the vehicle coordinate system based on the time series data of the three-axis acceleration. Herein, the analysis of the amplitude described above is the same as that at the time of determining the abnormal amplitude state, so that the description thereof will not be repeated. As the time series data of the amplitude corresponding to the vertical direction of the vehicle coordinate system, a processing result obtained by one of processing units including the abnormality determination unit 12 and the traveling state determination unit 13A can be shared with the other processing unit.

As described above, when the time series data of the amplitude corresponding to the vertical direction of the vehicle coordinate system is obtained, the traveling state determination unit 13A divides the time series data of the amplitude into sections each having a predetermined length, for example, 10 seconds. Subsequently, the traveling state determination unit 13A calculates a variance value σ of the amplitude included in the section for each section obtained by dividing the time series data of the amplitude. Thereafter, the traveling state determination unit 13A determines whether the variance value σ of the amplitude calculated for each section falls within a predetermined range. For example, as an upper limit value Th3 and a lower limit value Th4 defining the range described above, an upper limit value and a lower limit value of the amplitude that can be caused as road noise at the time when the vehicle is traveling can be set. At this point, in a case in which the variance value of the amplitude corresponding to the vertical direction of the vehicle coordinate system is equal to or smaller than the upper limit value Th3 and equal to or larger than the lower limit value Th4 in all of the sections obtained by dividing the time series data of the amplitude, the state of being carried in the vehicle and the traveling state are determined. The analysis of the amplitude described above and determination of the traveling state described above can also be implemented even if the communication control terminal 1 is placed on the vehicle in an optional orientation.

In this way, the traveling state determination unit 13A determines the traveling state based on the amplitude that can be caused as road noise at the time when the vehicle is traveling, so that detection accuracy for the traveling state can be improved as a result of detecting the traveling state based on behavior of the vehicle that can be caused at the time of traveling on a road.

The congestion state determination unit 13B is a processing unit that determines that the vehicle is in a congestion state. Herein, the "congestion state" may include short-time traveling, for example, traveling within one minute as a determination cycle for the traveling state. As merely an example, in a case in which the traveling state determination unit 13A determines a non-traveling state, the congestion state determination unit 13B performs determination of the congestion state. In addition to the non-traveling state, by narrowing down the state to be a case in which the traveling state determination unit 13A determines that the variance value of the amplitude is smaller than the lower limit value Th4 in any section, the congestion state determination unit 13B can perform determination of the congestion state.

FIG. 7 is a diagram illustrating an example of a method for determining the congestion state. As illustrated in FIG. 7, in a case of determining the congestion state, as merely an example, the acceleration of the X-axis, the acceleration of the Y-axis, and the acceleration of the Z-axis may be used as inputs. For example, as in the example described above, in a case in which the congestion state is determined at one-minute cycles, time series data of three-axis acceleration corresponding to one minute is input.

With such inputs, the congestion state determination unit 13B analyzes the traveling direction based on the three-axis acceleration including the acceleration of the X-axis, the acceleration of the Y-axis, and the acceleration of the Z-axis. Herein, the analysis of the traveling direction described above is the same as that at the time of determining the abnormal rotation state, so that the description thereof will not be repeated. As the traveling direction described above, a processing result obtained by one of the processing units including the abnormality determination unit 12 and the congestion state determination unit 13B can be shared with the other processing unit.

When the traveling direction is obtained as described above, the congestion state determination unit 13B analyzes a movement state in the traveling direction, for example, acceleration and deceleration. Specifically, the congestion state determination unit 13B performs the following processing for all pieces of the three-axis acceleration corresponding to a sampling frequency of the gyro acceleration sensor 5 in the time series data of the three-axis acceleration, or for each piece of the three-axis acceleration resampled at predetermined intervals, for example, every one second. That is, the congestion state determination unit 13B removes the gravity acceleration from the composite acceleration obtained by compositing the three-axis acceleration. Subsequently, the congestion state determination unit 13B extracts an acceleration component corresponding to the traveling direction from the composite acceleration from which the gravity acceleration is removed. The congestion state determination unit 13B then performs first-order integration on the time series data of the acceleration component corresponding to the traveling direction. Due to this, time series data of the speed corresponding to the traveling direction can be obtained. Thereafter, the congestion state determination unit 13B counts a frequency at which acceleration and deceleration equal to or larger than a threshold Th5 are detected from the time series data of the speed corresponding to the traveling direction. For example, the frequency of acceleration can be obtained by counting the number of times when the speed is detected, the speed with which a sign of acceleration is positive and an absolute value of the speed is equal to or larger than the threshold Th5. Additionally, the frequency of deceleration can be obtained by counting the number of times when the speed is detected, the speed with which the sign of acceleration is negative and the absolute value of the speed is equal to or larger than the threshold Th5. The congestion state determination unit 13B then determines whether the state is the congestion state depending on whether each of the frequency of acceleration and the frequency of deceleration is equal to or larger than a threshold Th6. For example, it is determined that the state is the congestion state in a case in which each of the frequency of acceleration and the frequency of deceleration is equal to or larger than the threshold Th6. On the other hand, it is determined that the state is a non-congestion state in a case in which the frequency of acceleration or the frequency of deceleration is smaller than the threshold Th6.

In this way, the congestion state determination unit 13B determines the congestion state based on the frequency of acceleration and the frequency of deceleration, so that detection accuracy for the congestion state can be improved as a result of detecting the congestion state based on behavior of the vehicle that is caused at the time of congestion.

Herein, exemplified is a case of determining whether the state is the congestion state based on the frequency of acceleration and the frequency of deceleration, but it is possible to determine whether the state is the congestion state based on only one of them.

Each of the abnormality monitoring timer 15A, the traveling monitoring timer 15B, and the start-up timer 15C has a timer function.

As merely an example, the following exemplifies a case in which the three timers described above are implemented when the control unit 10 executes timer software, but the three timers may be implemented by hardware. Furthermore, as merely an example, the following exemplifies a case in which the three timers use a count-up scheme of counting an elapsed time, but they may use a count-down scheme of counting a grace period.

These three timers including the abnormality monitoring timer 15A, the traveling monitoring timer 15B, and the start-up timer 15C are started up or reset in accordance with a determination result of the abnormality determination unit 12 or the determination unit 13, that is, a state of the communication control terminal 1.

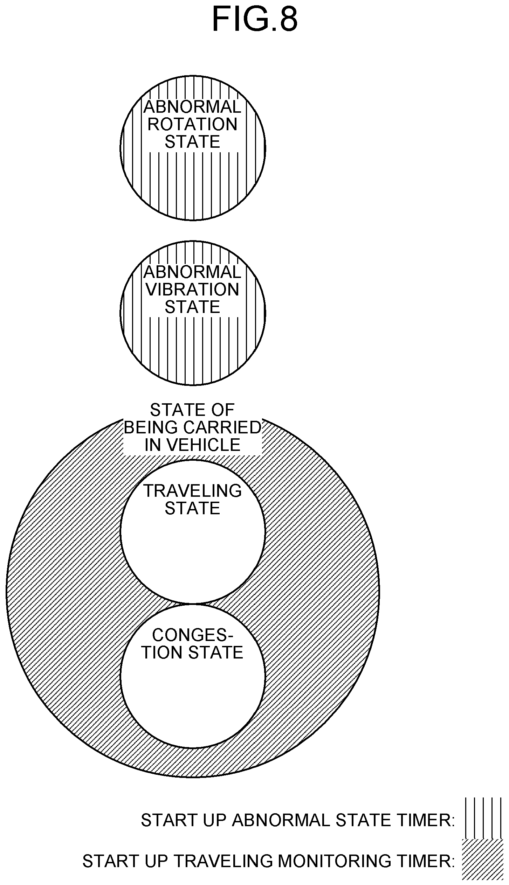

FIG. 8 is a diagram illustrating an example of a start-up condition for the timer. In FIG. 8, hatching with vertical lines indicates the state of the communication control terminal 1 satisfying a condition under which the abnormality monitoring timer 15A is started up, and hatching with oblique lines indicates the state of the communication control terminal 1 satisfying a condition under which the traveling monitoring timer 15B is started up.

As illustrated in FIG. 8, in a case in which the state is any of the abnormal states including the abnormal rotation state and the abnormal vibration state, there is the possibility that an invalid operation is performed such that the housing of the communication control terminal 1 is held and shaken to imitate vibration at the time of being mounted on the vehicle. In this case, the abnormality monitoring timer 15A is started up by the abnormality determination unit 12.

In a case of the state of being carried in the vehicle, the non-traveling state, and the non-congestion state, there is a high possibility that the vehicle is stopping. In this case, if data communication is permitted when the vehicle is stopping for a long time, it cannot be said that the network connection service is dedicated to the state of being carried in the vehicle and the traveling state or the congestion state, so that the network connection service is hardly differentiated from existing network connection services. Thus, from an aspect of preventing data communication from being performed when the vehicle is stopping for a long time, the traveling monitoring timer 15B is started up by the determination unit 13.

Although FIG. 8 does not illustrate a start-up condition for the start-up timer 15C, the start-up timer 15C measures an elapsed time from when the communication control terminal 1 is started up. The start-up timer 15C can be started up in a case in which electric supply from the power source of the vehicle such as the accessory socket or the cigar socket is detected, that is, power-ON of the communication control terminal 1 is detected. At this point, by backing up a timer value of the start-up timer 15C in a nonvolatile memory and the like at a stage of detecting interruption of electric supply from the power source of the vehicle, that is, power-OFF of the communication control terminal 1, the timer value can be carried on at the time when the power of the communication control terminal 1 is turned ON next time.

When the power source of the communication control terminal 1 is turned ON, the control unit 10 measures an elapsed time. For example, when the power source of the communication control terminal 1 is turned ON, the measurement unit 15 reads out an elapsed time corresponding to the identification information used for communication by the communication unit 4 from the elapsed time data 6A in the storage unit 6. For example, when the power source of the communication control terminal 1 is turned ON, the measurement unit 15 reads out an elapsed time corresponding to a phone number used for communication by the communication unit 4 from the elapsed time data 6A in the storage unit 6. The measurement unit 15 then sets a timer value corresponding to the read-out elapsed time to the start-up timer 15C, and measures the elapsed time from the set timer value by the start-up timer 15C. When power-OFF of the communication control terminal 1 is detected, the control unit 10 stores the measured elapsed time in the elapsed time data 6A in the storage unit 6. For example, the measurement unit 15 reads out the timer value that is being measured by the start-up timer 15C, and overwrites the elapsed time data 6A with the elapsed time corresponding to the timer value to be stored as the elapsed time with the phone number used for communication by the communication unit 4. The measurement unit 15 may overwrite the elapsed time data 6A with the timer value that is being measured by the start-up timer 15C to be stored as occasion demands. Due to this, the elapsed time data 6A stores the elapsed time after the power source is turned ON for each phone number.

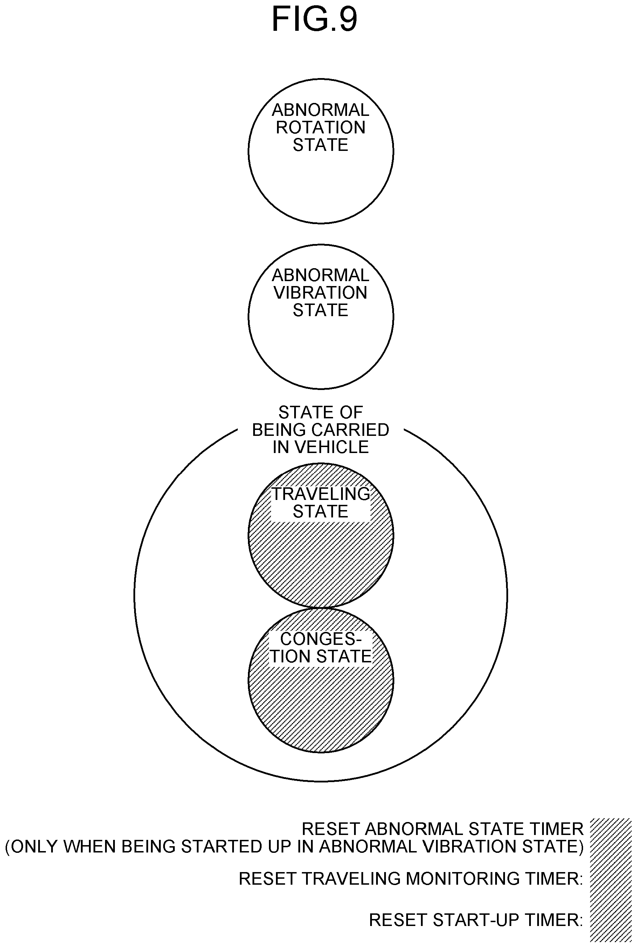

FIG. 9 is a diagram illustrating an example of a reset condition for the timer. FIG. 9 illustrates, by hatching with oblique lines, a state of the communication control terminal 1 satisfying a condition under which the abnormality monitoring timer 15A, the traveling monitoring timer 15B, and the start-up timer 15C are reset.

As illustrated in FIG. 9, in a case of the state of being carried in the vehicle and any of the traveling state and the congestion state, it is found that the state is a state of using a network connection service appropriate for the gist of dedication to the state of being carried in the vehicle. In this case, timer values of the traveling monitoring timer 15B and the start-up timer 15C are reset to an initial value, for example, "0". In a case of resetting the timer value of the start-up timer 15C to the initial value, the measurement unit 15 also resets, to the initial value, the elapsed time corresponding to the phone number used for communication by the communication unit 4 stored in the elapsed time data 6A.

Herein, the timer value of the abnormality monitoring timer 15A is not necessarily immediately reset even in a case of the state of being carried in the vehicle and any of the traveling state and the congestion state, and there is an additional requirement.

That is, whether the timer value of the abnormality monitoring timer 15A is reset is controlled depending on whether the abnormality monitoring timer 15A is started up due to which of the abnormal states including the abnormal rotation state and the vibration movement state.

For example, in a case in which the abnormality monitoring timer 15A is started up due to the abnormal rotation state, reset of the timer value of the abnormality monitoring timer 15A is prohibited until the abnormality monitoring timer 15A times out once. On the other hand, in a case in which the abnormality monitoring timer 15A is started up due to the abnormal vibration state, reset of the timer value of the abnormality monitoring timer 15A is permitted.

As described above, the reason why the abnormality monitoring timer 15A is caused to time out in a case in which the abnormality monitoring timer 15A is started up due to the abnormal rotation state is that there is a higher possibility that an invalid operation imitating vibration at the time of being mounted on the vehicle is performed in the abnormal rotation state than the abnormal vibration state.

The communication control unit 17 is a processing unit that controls communication performed by the communication unit 4. The communication control unit 17 makes various settings related to communication performed by the communication unit 4. By way of example, the communication control unit 17 reads various pieces of information stored in the SIM card 3A via the SIM slot 3, and makes various settings related to mobile communication performed by the communication unit 4. For example, the communication control unit 17 reads out identification information for identifying a communication contract such as an identification number and a phone number from the SIM card 3A. In performing communication, the communication control unit 17 notifies the read-out identification information to the communication unit 4. The communication unit 4 performs mobile communication using the notified identification information.

The communication control unit 17 also limits the use of communication by the communication unit 4. For example, the communication control unit 17 limits the use of communication by the communication unit 4 in accordance with the elapsed time measured by the abnormality monitoring timer 15A, the traveling monitoring timer 15B, and the start-up timer 15C. For example, the communication control unit 17 permits communication by the communication unit 4 in a case in which the elapsed time measured by the start-up timer 15C falls within a predetermined allowed time, and limits the use of communication by the communication unit 4 in a case in which the elapsed time exceeds the allowed time.

As merely an example, the communication control unit 17 monitors the three timers including the abnormality monitoring timer 15A, the traveling monitoring timer 15B, and the start-up timer 15C. The communication control unit 17 then determines whether any of the three timers has timed out.

For example, as an example of a threshold compared with the timer value of each timer, in a case in which the timer value of the abnormality monitoring timer 15A exceeds a threshold Th7, for example, 60 minutes, it is determined that the timer has timed out. Additionally, in a case in which the timer value of the traveling monitoring timer 15B exceeds a threshold Th8, for example, 90 minutes, it is determined that the timer has timed out. As described above, the reason why the timeout of the abnormality monitoring timer 15A is set to be shorter than the timeout of the traveling monitoring timer 15B is that the timeout at the time of detecting the invalid operation should get higher priority than the timeout at the time of detecting stopping of the vehicle. In a case in which the timer value of the start-up timer 15C exceeds a threshold Th9, for example, 60 minutes, it is determined that the timer has timed out.

In a case in which any of the three timers has timed out, the communication control unit 17 limits the use of communication. As merely an example, the communication control unit 17 controls the wireless communication function to be turned OFF by controlling a function of a wireless LAN access point to be turned OFF. As another example, the communication control unit 17 controls the wireless communication function to be turned OFF by disconnecting communication connection between the communication control terminal 1 and a base station of a mobile network.

Herein, as merely an example, exemplified is a case in which the three timers use the count-up scheme, but the three timers may use the count-down scheme as described above. In this case, the threshold Th7 to the threshold Th9 set for the timeout of the three timers may be respectively set to the three timers as initial values, and timeout may be determined in a case in which the timer value of each of the timers becomes zero.

In this way, the communication control terminal 1 can enable communication in a case in which the vehicle is in the traveling state, and limit communication in a case in which the vehicle is in the non-traveling state. Additionally, the communication control terminal 1 can enable communication for a certain elapsed time even when the vehicle is in the non-traveling state, and limit communication after the certain elapsed time. For example, the communication control terminal 1 can enable communication in a case in which the elapsed time from when the power source of the communication control terminal 1 is turned ON falls within the predetermined allowed time (for example, 60 minutes) even if the vehicle is in the non-traveling state, and limit communication when the elapsed time exceeds the allowed time. The communication control terminal 1 stores the elapsed time in the elapsed time data 6A in the storage unit 6 for each phone number of the communication contract, reads out the elapsed time corresponding to the phone number used for communication by the communication unit 4 from the elapsed time data 6A, and measures the elapsed time following the read-out elapsed time. Due to this, for example, even in a case in which the elapsed time corresponding to the phone number used for communication by the communication unit 4 exceeds the allowed time and communication is limited, the communication control terminal 1 replaces the SIM card 3A in the SIM slot 3 and cause the phone number used for communication by the communication unit 4 to be a new phone number to newly measure an elapsed time corresponding to the new phone number. Due to this, the communication control terminal 1 can enable communication with the new phone number until the elapsed time exceeds the allowed time, and prevents convenience from being impaired. In a case in which the SIM card 3A that was set in the past is set to the SIM slot 3 again, the communication control terminal 1 reads out the elapsed time corresponding to the phone number of the set SIM card 3A from the elapsed time data 6A in the storage unit 6, and measures the elapsed time following the read-out elapsed time. Due to this, the communication control terminal 1 can appropriately manage the elapsed time for each phone number, and appropriately limit communication in accordance with a remaining elapsed time corresponding to the phone number of the set SIM card 3A. For example, in a case in which the SIM card 3A of the phone number the elapsed time of which exceeds the allowed time is set to the SIM slot 3, the communication control terminal 1 can limit communication.

### <Procedure of processing>

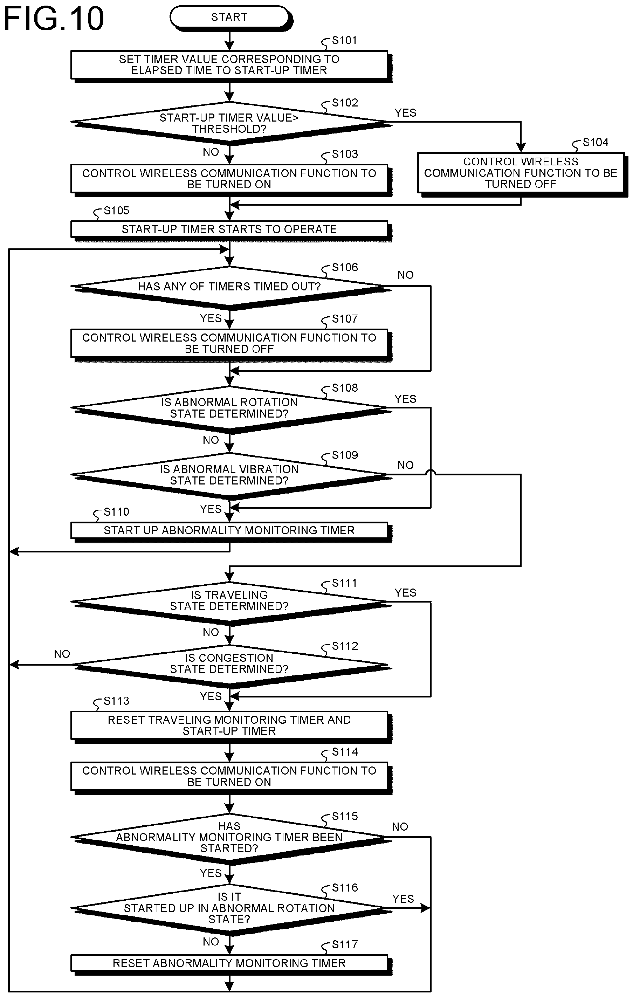

Next, the following describes a procedure of processing performed by the communication control terminal 1 according to the present embodiment. FIG. 10 is a flowchart illustrating a procedure of communication control processing according to the embodiment. As merely an example, this processing is started in a case in which the power source of the communication control terminal 1 is turned ON, and a case in which electric supply from the power source of the vehicle is started via the accessory socket or the cigar socket.

As illustrated in FIG. 10, the measurement unit 15 reads out the elapsed time corresponding to the identification information used for communication by the communication unit 4 from the elapsed time data 6A, and sets the timer value corresponding to the read-out elapsed time to the start-up timer 15C (Step S101). At this point, if the timer value of the start-up timer 15C does not exceed the threshold Th9 (No at Step S102), the communication control unit 17 controls the wireless communication function to be turned ON (Step S103). On the other hand, if the previous timer value of the start-up timer 15C exceeds the threshold Th9 (Yes at Step S102), the communication control unit 17 controls the wireless communication function to be turned OFF (Step S104). The measurement unit 15 causes an operation of the start-up timer 15C to be started, and measures the elapsed time from the set timer value by the start-up timer 15C (Step S105).

Subsequently, the communication control unit 17 determines whether any one of the three timers including the abnormality monitoring timer 15A, the traveling monitoring timer 15B, and the start-up timer 15C has timed out (Step S106).

At this point, if any one of the three timers has timed out (Yes at Step S106), the communication control unit 17 controls the wireless communication function to be turned OFF (Step S107). If none of the three timers has timed out (No at Step S106), the processing at Step S107 is skipped, and the process proceeds to the processing at Step S108.

Thereafter, the abnormality determination unit 12 determines the traveling direction from the acceleration, and determines the abnormal rotation state based on the traveling direction and a value of the rotational speed (Step S108). If the state is not the abnormal rotation state (No at Step S108), the abnormality determination unit 12 determines the abnormal vibration state based on a value of the acceleration (Step S109).

Herein, if the state is any of the abnormal states including the abnormal rotation state and the vibration movement state (Yes at Step S108, or Yes at Step S109), the abnormality determination unit 12 starts up the abnormality monitoring timer 15A (Step S110).

As described above, in a case in which the state is any of the abnormal states including the abnormal rotation state and the vibration movement state, the determination unit 13 determines that the state is the state of not being carried in the vehicle, so that succeeding processing is skipped, and the process proceeds to the processing at Step S106.

On the other hand, if the state is not any of the abnormal states including the abnormal rotation state and the vibration movement state (No at Step S108, and No at Step S109), the determination unit 13 determines that the state is the state of being carried in the vehicle. In this case, the processing at Step S110 is skipped, and the process proceeds to the processing at Step S111.

The traveling state determination unit 13A determines whether the state is the traveling state based on the vibration state that is determined based on the acceleration (Step S111). At this point, if the state is the non-traveling state (No at Step S111), the congestion state determination unit 13B determines whether the state is the congestion state based on the movement state that is determined based on the acceleration (Step S112). If the state is not any of the traveling state and the congestion state (No at Step S111, and No at Step S112), succeeding processing is skipped, and the process proceeds to the processing at Step S106.

Herein, if the state is any of the traveling state and the congestion state (Yes at Step S111, or Yes at Step S112), the determination unit 13 resets timer values of the traveling monitoring timer 15B and the start-up timer 15C (Step S113). Furthermore, the communication control unit 17 controls the wireless communication function to be turned ON (Step S114).

Subsequently, the determination unit 13 determines whether the abnormality monitoring timer 15A has been started (Step S115). At this point, if the abnormality monitoring timer 15A has been started (Yes at Step S115), the determination unit 13 determines whether the abnormality monitoring timer 15A has been started up due to detection of the abnormal rotation state (Step S116) .

If the abnormality monitoring timer 15A has been started up due to detection of the abnormal vibration state (No at Step S116), the determination unit 13 resets the timer value of the abnormality monitoring timer 15A (Step S117), and advances the process to the processing at Step S106.

If the abnormality monitoring timer 15A has not been started up, or if the abnormality monitoring timer 15A has been started up due to detection of the abnormal vibration state (No at Step S115, or Yes at Step S116), the processing at Step S117 is skipped, and the process proceeds to the processing at Step S106.

### <Effects of embodiment>

As described above, the communication control terminal 1 according to the present embodiment includes the storage unit 6, the communication unit 4, the measurement unit 15, and the communication control unit 17. The storage unit 6 stores the elapsed time for each piece of the identification information for identifying the communication contract. The communication unit 4 performs communication using the identification information. When the power source of the communication control terminal 1 is turned ON, the measurement unit 15 reads out, from the storage unit 6, the elapsed time corresponding to the identification information used for communication by the communication unit 4, and measures the elapsed time following the read-out elapsed time. The communication control unit 17 permits communication by the communication unit 4 in a case in which the elapsed time measured by the measurement unit 15 falls within the predetermined allowed time, and limits the use of communication by the communication unit 4 in a case in which the elapsed time exceeds the allowed time. Due to this, the communication control terminal 1 can give a certain grace to the time from when the power source is turned ON until the use of communication is limited, so that it is possible to prevent convenience of the network connection service and the like dedicated to the state of being carried in the vehicle from being impaired. The communication control terminal 1 measures the elapsed time for each piece of the identification information for identifying the communication contract, so that communication can be appropriately limited in accordance with the elapsed time for each piece of the identification information of the set SIM card 3A. Due to this, the communication control terminal 1 can prevent convenience from being impaired. For example, even in a case in which communication is limited after the certain elapsed time, the communication control terminal 1 can replace the SIM card 3A with a new one to give a certain grace again before the use is limited, and prevent convenience from being impaired.

The identification information is assumed to be the phone number of the communication contract. Due to this, the communication control terminal 1 can manage the elapsed time for each phone number.

In a case in which the elapsed time exceeds the allowed time, the communication control unit 17 prohibits communication by the communication unit 4. Due to this, in a case in which the elapsed time exceeds the allowed time, the communication control terminal 1 can cause communication by the communication unit 4 to be prohibited.

The communication control terminal 1 according to the present embodiment further includes the determination unit 13. The determination unit 13 determines the traveling state of the vehicle. In a case in which the vehicle is traveling as a result of determination by the determination unit 13, the measurement unit 15 resets the elapsed time that is being measured and the elapsed time stored in the storage unit 6 corresponding to the identification information used for communication by the communication unit 4. Due to this, the elapsed time is reset when the vehicle travels, so that the communication control terminal 1 can measure the elapsed time in the stopped state of the vehicle after the power source of the communication control terminal 1 is turned ON. Due to this, the communication control terminal 1 can appropriately give a certain grace to the time until the use of communication is limited in a case in which the vehicle is in the stopped state after the power source of the communication control terminal 1 is turned ON.

The communication control terminal 1 according to the present embodiment further includes the acquisition unit 11. The acquisition unit 11 acquires values of the acceleration and the rotational speed. The determination unit 13 determines the traveling direction based on the acceleration, determines the abnormal rotation state based on the traveling direction and the value of the rotational speed, and further determines that the communication control terminal 1 is in the state of being carried in the vehicle based on the determination result of the abnormal rotation state. In a case of determining that the determination unit 13 is not in the state of being carried in the vehicle, the communication control unit 17 limits the use of communication by the communication unit 4. Due to this, the communication control terminal 1 can achieve determination of the state of being carried in the vehicle independent of signal supply from the vehicle. The terminal can be installed in an optional orientation.

In a case in which the communication control terminal 1 is not in the state of being carried in the vehicle, the determination unit 13 starts up the abnormality monitoring timer 15A that measures the grace period from when the fact that the communication control terminal 1 is not in the state of being carried in the vehicle is detected until the use of communication is limited, or the elapsed time from when the fact that the communication control terminal 1 is not in the state of being carried in the vehicle is detected. The communication control unit 17 permits the use of communication until a first timer value measured by the abnormality monitoring timer 15A reaches a first predetermined time, and limits the use of communication in a case in which the first timer value reaches the first predetermined time. Due to this, the communication control terminal 1 gives a certain grace to the time until the use of communication is limited in a situation in which an invalid operation imitating vibration at the time of being mounted on the vehicle may be caused, so that it is possible to prevent convenience of a network connection service and the like dedicated to the state of being carried in the vehicle from being impaired.

In a case in which the first timer value reaches the first predetermined time, the communication control unit 17 limits the use of communication regardless of a determination result of the traveling state. Due to this, in a situation in which an invalid operation imitating vibration at the time of being mounted on the vehicle may be caused, the communication control terminal 1 can give higher priority to limiting the use of communication than convenience of a network connection service and the like dedicated to the state of being carried in the vehicle.

The determination unit 13 further determines the abnormal vibration state based on the value of the acceleration, and starts up a first timer in a case of determining that the communication control terminal 1 is not in the state of being carried in the vehicle based on a determination result of the abnormal vibration state. Due to this, the communication control terminal 1 can multilaterally detect the situation in which an invalid operation imitating vibration at the time of being mounted on the vehicle may be caused, so that it is possible to further suppress an error in detecting an invalid operation imitating vibration at the time of being mounted on the vehicle.

In a case of the traveling state, the determination unit 13 controls whether to reset the first timer value of the first timer to the initial value depending on whether the fact that the communication control terminal 1 is not in the state of being carried in the vehicle is detected due to which of the abnormal states including the abnormal rotation state and the abnormal vibration state. Due to this, the communication control terminal 1 can change priority to be given to convenience of a network connection service and the like dedicated to the state of being carried in the vehicle or given to limiting the use of communication depending on the possibility that an invalid operation imitating vibration at the time of being mounted on the vehicle is caused.

### <Practical examples>

The following exemplifies practical examples of the present embodiment. For example, the flowchart illustrated in FIG. 10 exemplifies a case in which determination of the congestion state is performed in a case of the non-traveling state (No at Step Sill), but conditions under which determination of the congestion state is performed may be further narrowed down. For example, the conditions may be narrowed down to a case in which a variance value of the amplitude corresponding to the vertical direction of the vehicle coordinate system is smaller than the lower limit value Th4 in any of the sections obtained by dividing the time series data of the amplitude, and the congestion state determination unit 13B may be caused to perform determination of the congestion state. Due to this, determination of the congestion state can be omitted in a case in which there is a high possibility that the state is not the congestion state.

As illustrated in FIG. 1, exemplified is a case in which the communication control terminal 1 reads various pieces of information about mobile communication from the SIM card 3A set in the SIM slot 3, and sets the various pieces of information to the communication unit 4. Alternatively, the communication control terminal 1 may download various pieces of information about mobile communication to an embedded SIM such as an embedded Subscriber Identity Module (eSIM) to be stored, and read various pieces of information about mobile communication from the embedded SIM to be set to the communication unit 4.

### <Application examples>

The following exemplifies application examples of the present embodiment. For example, the present embodiment exemplifies a case of controlling whether to limit the use of communication depending on whether the state is the state of being carried in the vehicle, but a target controlled depending on whether the state is the state of being carried in the vehicle is not limited to limiting the use of communication. As merely an example, a route selection mode of a navigation function of a portable terminal device, a tablet terminal, or a wearable terminal can be switched depending on whether the state is the state of being carried in the vehicle. For example, a route for the vehicle is selected as a route to a destination in a case of the state of being carried in the vehicle, while a route for a movement unit other than the vehicle, for example, a route for walking or a route for the time of using a transportation facility is selected in a case of the state of not being carried in the vehicle. As another example, it is possible to control whether to limit use of a television function of a portable terminal device, a tablet terminal, or a wearable terminal depending on whether the state is the state of being carried in the vehicle. For example, the use of the television function is limited, for example, display of an image is limited in a case of the state of being carried in the vehicle, while the use of the television function is permitted in a case of the state of not being carried in the vehicle.

### <System>

Information including the processing procedure, the control procedure, specific names, various kinds of data and parameters described above or illustrated in the drawings can be optionally changed unless otherwise specifically noted.

The constituent elements of the devices illustrated in the drawings are merely conceptual, and it is not required that they are physically configured as illustrated necessarily. That is, specific forms of distribution and integration of the devices are not limited to those illustrated in the drawings. That is, all or part thereof may be functionally or physically distributed/integrated in arbitrary units depending on various loads or usage states.

Furthermore, all or optional part of processing functions executed by the respective devices may be implemented by a central processing unit (CPU) and computer programs analyzed and executed by the CPU, or may be implemented as hardware using wired logic.

### <Hardware>

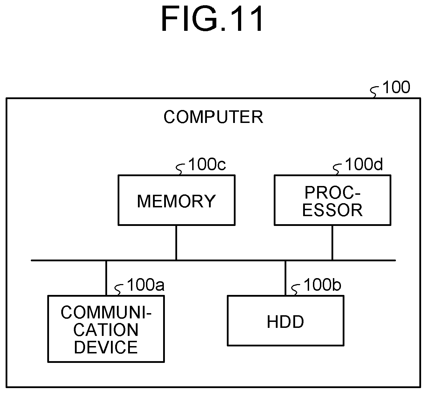

Next, the following describes a hardware configuration example of a computer that executes an information processing program having the same function as that of the information processing device described in the present embodiment. FIG. 11 is a diagram for explaining the hardware configuration example. As illustrated in FIG. 11, the computer 100 includes a communication device 100a, a hard disk drive (HDD) 100b, a memory 100c, and a processor 100d. The components illustrated in FIG. 11 are connected to each other via a bus and the like.

The communication device 100a is a network interface card and the like, and communicates with other servers. The HDD 100b stores DataBase (DB) and computer programs for activating the functions illustrated in FIG. 1, for example.

The processor 100d activates a process of executing each of the functions described above with reference to FIG. 1 and the like by reading out, from the HDD 100b and the like, a computer program for performing the same processing as each of the processing units illustrated in FIG. 1 and the like to be loaded into the memory 100c. For example, the process executes the same function as that of each of the processing units included in the computer 100. Specifically, the processor 100d reads out, from the HDD 100b and the like, computer programs each having the same function as that of each of the acquisition unit 11, the abnormality determination unit 12, the determination unit 13, the measurement unit 15 (the abnormality monitoring timer 15A, the traveling monitoring timer 15B, the start-up timer 15C), the communication control unit 17, and the like. The processor 100d then executes a process of performing the same processing as that of each of the acquisition unit 11, the abnormality determination unit 12, the determination unit 13, the measurement unit 15, the communication control unit 17, and the like.

In this way, the computer 100 operates as the information processing device that performs various kinds of processing methods by reading out and executing the computer programs. Alternatively, the computer 100 can implement the same function as that in the embodiment described above by reading out the computer program described above from a recording medium by a medium reading device and executing the read-out computer program. The computer program in this other embodiment is not necessarily executed by the computer 100. For example, in a case in which another computer or server executes the computer program, or in a case in which they cooperate with each other to execute the computer program, the function of the information processing device described in the present embodiment can be similarly implemented.

This computer program can be distributed via a network such as the Internet. This computer program is recorded in a computer-readable recording medium such as a hard disk, a flexible disk (FD), a CD-ROM, a MagnetoOptical disk (MO), or a Digital Versatile Disc (DVD), and can be executed by being read out from the recording medium by the computer.

### DESCRIPTION OF REFERENCE NUMERALS

1 COMMUNICATION CONTROL TERMINAL
2 POWER SOURCE CONNECTION UNIT
3 SIM SLOT
3A SIM CARD
4 COMMUNICATION UNIT
5 GYRO ACCELERATION SENSOR
6 STORAGE UNIT
6A ELAPSED TIME DATA
10 CONTROL UNIT
11 ACQUISITION UNIT
12 ABNORMALITY DETERMINATION UNIT
13 DETERMINATION UNIT
13A TRAVELING STATE DETERMINATION UNIT
13B CONGESTION STATE DETERMINATION UNIT
15 MEASUREMENT UNIT
15A ABNORMALITY MONITORING TIMER
15B TRAVELING MONITORING TIMER
15C START-UP TIMER
17 COMMUNICATION CONTROL UNIT

## Claims

1. An information processing device comprising:
a storage unit configured to store an elapsed time for each piece of identification information for identifying a communication contract;
a communication unit configured to perform communication using the identification information;
a measurement unit configured to read out, from the storage unit, the elapsed time corresponding to the identification information used for communication by the communication unit when a power source of the information processing device is turned ON, and measure an elapsed time following the read-out elapsed time; and
a communication control unit configured to permit communication by the communication unit in a case in which the elapsed time measured by the measurement unit falls within a predetermined allowed time, and limit use of communication by the communication unit in a case in which the elapsed time exceeds the allowed time.

2. The information processing device according to claim 1, wherein the identification information is a phone number of a communication contract.

3. The information processing device according to claim 1, wherein the communication control unit prohibits communication by the communication unit in a case in which the elapsed time exceeds the allowed time.

4. The information processing device according to claim 1, further comprising:
a determination unit configured to determine a traveling state of a vehicle, wherein
the measurement unit resets an elapsed time that is being measured and the elapsed time stored in the storage unit corresponding to the identification information used for communication by the communication unit in a case in which the vehicle is traveling as a result of determination by the determination unit.

5. The information processing device according to claim 4, further comprising:
an acquisition unit configured to acquire values of acceleration and a rotational speed, wherein
the determination unit determines a traveling direction from the acceleration, determines an abnormal rotation state based on the traveling direction and the value of the rotational speed, and further determines that the information processing device is in a state of being carried in the vehicle based on a determination result of the abnormal rotation state, and
the communication control unit limits use of communication by the communication unit in a case in which the determination unit determines that the state is not the state of being carried in the vehicle.

6. The information processing device according to claim 5, wherein
the determination unit starts up, in a case in which the information processing device is not in the state of being carried in the vehicle, a first timer configured to measure a grace period from when the fact that the information processing device is not in the state of being carried in the vehicle is detected until the use of communication is limited, or an elapsed time from when the fact that the information processing device is not in the state of being carried in the vehicle is detected, and
the communication control unit permits the use of communication until a first timer value measured by the first timer reaches a first predetermined time, and limits the use of communication in a case in which the first timer value reaches the first predetermined time.

7. The information processing device according to claim 6, wherein the communication control unit limits the use of communication regardless of a determination result of the traveling state in a case in which the first timer value reaches the first predetermined time.

8. The information processing device according to claim 6, wherein the determination unit further determines an abnormal vibration state based on the value of the acceleration, and starts up the first timer in a case of determining that the information processing device is not in the state of being carried in the vehicle based on a determination result of the abnormal vibration state.

9. The information processing device according to claim 8, wherein, in a case of the traveling state, the determination unit controls whether to reset the first timer value of the first timer to an initial value depending on whether the fact that the information processing device is not in the state of being carried in the vehicle is detected due to which of abnormal states including the abnormal rotation state and the abnormal vibration state.

10. An information processing method used for an information processing device, the method comprising:
a step of reading out, when a power source of the information processing device is turned ON, an elapsed time corresponding to identification information used for communication by a communication unit configured to perform communication by using the identification information from a storage unit configured to store an elapsed time for each piece of the identification information for identifying a communication contract, and measuring an elapsed time following the read-out elapsed time; and
a step of permitting communication by the communication unit in a case in which the measured elapsed time falls within a predetermined allowed time, and limiting use of communication by the communication unit in a case in which the measured elapsed time exceeds the allowed time.

11. An information processing program used for an information processing device to cause the information processing device to perform:
a procedure of reading out, when a power source of the information processing device is turned ON, an elapsed time corresponding to identification information used for communication by a communication unit configured to perform communication by using the identification information from a storage unit configured to store an elapsed time for each piece of the identification information for identifying a communication contract, and measuring an elapsed time following the read-out elapsed time; and
a procedure of permitting communication by the communication unit in a case in which the measured elapsed time falls within a predetermined allowed time, and limiting use of communication by the communication unit in a case in which the measured elapsed time exceeds the allowed time.
